Europäisches Patentamt

European Patent Office

Office européen des brevets

(19)

(11) Numéro de publication : **0 198 774**
**B1**

(12)

# FASCICULE DE BREVET EUROPÉEN

(45) Date de publication du fascicule du brevet :
**19.07.89**

(51) Int. Cl.⁴ : **B 29 C 45/16**

(21) Numéro de dépôt : **86420082.9**

(22) Date de dépôt : **21.03.86**

(54) **Moule pour la fabrication de pièces realisées en trois éléments concentriques.**

(30) Priorité : **22.03.85 FR 8504518**

(43) Date de publication de la demande :
**22.10.86 Bulletin 86/43**

(45) Mention de la délivrance du brevet :
**19.07.89 Bulletin 89/29**

(84) Etats contractants désignés :
**AT BE CH DE FR GB IT LI NL SE**

(56) Documents cités :
**DE--B-- 1 241 094**
**FR--A-- 1 503 998**
**PATENTS ABSTRACTS OF JAPAN, vol. 7, no. 59, (M-199) [1204], 11 mars 1983; & JP - A - 57 203 531 (TOSHIBA KIKAI K.K.) 13-12-1982**

(73) Titulaire : **CARTIER INDUSTRIE**
**Zone Industrielle**
**F-74300 Thyez (FR)**

(72) Inventeur : **Schomblond, Jacques**
**F-38110 Montagnieu (FR)**

(74) Mandataire : **Karmin, Roger et al**
**Cabinet MONNIER 150, cours Lafayette**
**F-69003 Lyon (FR)**

Jouve, 18, rue St-Denis, 75001 Paris, France

EP 0 198 774 B1

## Description

La présente invention est relative à des perfectionnements apportés aux moules destinés à la réalisation de pièces composites telles que des roues de véhicules, ou des organes réalisés en plusieurs matières.

On connaît un procédé de moulage par injection de pièces multicolores en matière plastique, objet du certificat d'addition français 2 425 317, qui décrit aussi le moule pour la mise en œuvre dudit procédé. Ce moule comporte des lames transversales qui constituent les parois latérales de plusieurs cavités alignées et dans lesquelles sont injectées des matières de couleurs différentes. Une fois cette injection terminée, les lames sont déplacées transversalement de manière qu'une injection ultérieure remplisse la partie de la cavité encore vide, ces parois latérales étant alors constituées par les éléments déjà moulés.

On comprend aisément que si l'on a affaire à des pièces d'importante épaisseur, les lames sont déformées transversalement par la pression d'injection, de telle sorte que leur déplacement devient pratiquement impossible. Dans ces conditions, le moule décrit dans le document considéré n'est pas susceptible d'être utilisé pour la fabrication de pièces épaisses de plusieurs couleurs et/ou matières.

On connaît aussi, par le document FR 2 462 261, un moule susceptible de permettre l'injection d'une pièce composite d'épaisseur importante du fait qu'il comprend un poinçon qui vient prendre appui contre le fond de la cavité pour constituer les parois latérales de deux chambres dans lesquelles des matières de couleurs et/ou de qualités différentes sont injectées simultanément ou successivement. Puis le poinçon est déplacé de manière qu'entre son extrémité et le fond de la cavité, on détermine une troisième chambre dans laquelle on injecte une autre matière. On comprend aisément que le déplacement du poinçon ne peut pas être fait de manière suffisamment précise pour éviter tout décalage de la troisième injection par rapport aux deux autres. Dans certaines pièces, un tel décalage est absolument proscrit, de telle sorte que ce moule n'est pas utilisable dans ces cas-là.

On connaît encore des moules dits « à transfert », c'est-à-dire comportant un poinçon unique et plusieurs matrices, les injections successives étant toujours faites sur le poinçon qui déplace la pièce déjà obtenue dans les matrices successives jusqu'à la dernière injection. On comprend aisément qu'un tel appareillage est extrêmement coûteux et que les éléments moulés dans une matrice puissent être facilement cassés lors de leur transport d'une matrice à l'autre.

On connaît enfin par le document japonais JP-A-57 203 531 un moule du type énoncé dans le préambule de la revendication 1, moule dont la partie coulissante est constituée par deux noyaux dans chacun desquels est creusée une partie d'une cavité de forme correspondant à celle de l'un des éléments de la pièce à réaliser, cet élément étant moulé par une première injection dans ladite cavité alors que ladite partie coulissante est décalée par rapport au plan moyen de l'empreinte destinée au moulage d'au moins un autre élément et qui est ménagée dans une partie fixe du moule, cet autre élément étant injecté après le retour de la partie coulissante à la position dans laquelle sa cavité est en correspondance avec l'empreinte.

Le moule réalisé suivant l'invention permet de produire des pièces à éléments concentriques sans aucun plan de joint apparent entre les éléments moulés successivement.

Le moule suivant l'invention est caractérisé en ce que :

— le premier noyau et le second noyau sont respectivement pourvus d'une extrémité à diamètre réduit ;

— et deux organes tubulaires entourent les deux noyaux en étant en contact mutuel par l'intermédiaire de broches qui traversent la cavité qu'ils déterminent, pour le moulage d'un élément intermédiaire inséré entre l'élément intérieur et l'élément extérieur précités, chacun desdits organes étant assujetti à des moyens de déplacement axial permettant de déplacer lesdits organes dans deux positions, une position où la cavité de moulage qu'ils déterminent est décalée par rapport à l'empreinte et où est effectué le moulage dudit élément intermédiaire et une autre position où ladite cavité de moulage est en correspondance avec l'empreinte.

Le dessin annexé, donné à titre d'exemple, permettra de mieux comprendre l'invention, les caractéristiques qu'elle présente et les avantages qu'elle est susceptible de procurer :

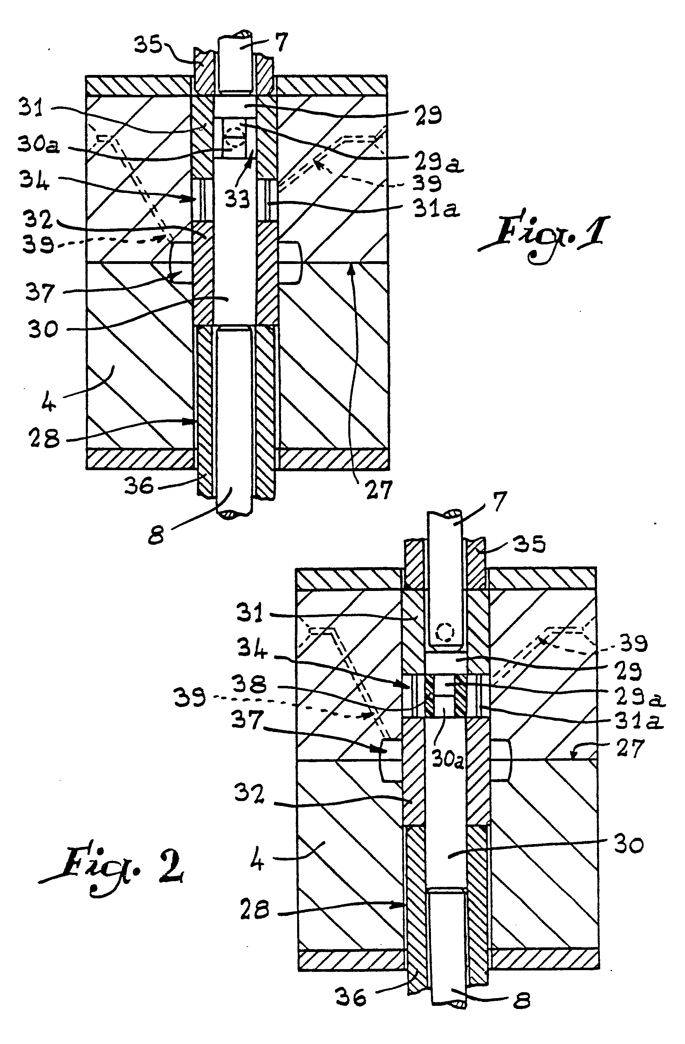

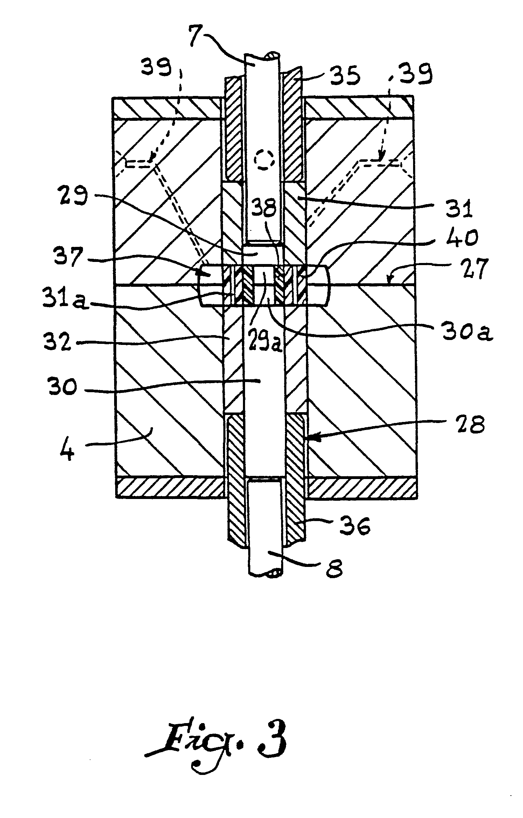

Fig. 1, 2, 3 illustrent un moule suivant l'invention.

Fig. 1 à 3 illustrent un mode d'exécution d'un moule conforme à l'invention permettent la fabrication d'une pièce dont les trois éléments sont concentriques.

Le moule considéré comprend une partie fixe 4 comportant deux composants qui reposent l'un contre l'autre par l'intermédiaire d'un plan de joint 27.

Au milieu de la partie 4 se trouve un alésage 28 au centre duquel sont disposés deux noyaux 29 et 30 situés en opposition l'un par rapport à l'autre et déplaçables axialement. Dans l'alésage 28 sont placées également deux fourrures tubulaires 31 et 32 qui sont en appui l'une contre l'autre par l'intermédiaire de pions 31a solidaires de la fourrure 31 et dont les extrémités libres reposent contre la face en vis-à-vis de l'autre fourrure 32.

On trouve dans ce mode d'exécution deux pistons 7 et 8 qui agissent sur les noyaux 29 et 30 de manière qu'ils puissent venir se placer bout à bout. Les extrémités des noyaux sont réalisées sous la forme d'embouts cylindriques 29a, 30a venant en appui l'un contre l'autre et qui déterminent une cavité tubulaire 33.

De même l'espace situé entre les extrémités en vis-à-vis des fourrures tubulaires 31, 32 forme une cavité 34. Les fourrures tubulaires sont associées avec des pistons tubulaires 35, 36 entourant les pistons 7 et 8.

On observe que dans le plan de joint 27 des deux composants de la partie 4 se trouve un chambrage constituant l'empreinte 37 de ladite partie fixe.

Le fonctionnement est le suivant :

Comme illustré en fig. 1, la cavité 33 est placée dans la première phase de moulage à une position élevée située au-dessus de la cavité 34 qui se trouve elle-même au-dessus de l'empreinte 37. Par l'intermédiaire de la tête d'injection 9, on peut remplir la cavité 33 de manière à constituer une douille tubulaire 38 (fig. 2). Les deux noyaux 29 et 30 sont ensuite descendus afin que la douille 38 se trouve en correspondance avec la cavité 34. Ainsi en injectant dans cette cavité au moyen d'une tête d'injection, en traversant des canaux d'amenée 39, on moule une bague 40 entourant la douille 38 (fig. 3).

L'ensemble des noyaux et des fourrures tubulaires est ensuite descendu afin que l'article moulé composite vienne se situer dans l'empreinte 37. Au moyen d'une troisième tête d'injection et par l'intermédiaire de canaux 39, on remplit l'empreinte 37 d'une matière plastique adéquate en vue de constituer un ensemble de trois pièces concentriques réalisées dans des matières différentes. C'est ainsi que la pièce obtenue peut être une roue destinée à un engin quelconque dont la douille constitue le moyeu, la bague le flasque et la partie périphérique le bandage de roulement.

On a ainsi réalisé un moulage qui permet de mouler par exemple une roue composée d'un moyen, d'un voile et d'un bandage, ces trois éléments étant moulés en des matières différentes en qualité et/ou en couleur.

## Revendication

Moule destiné à la fabrication d'un corps en plusieurs éléments comprenant un coulisseau (3) déplaçable à l'intérieur d'une partie fixe (4) du moule, le coulisseau étant constitué de deux noyaux alignés et en contact par leurs extrémités, noyaux dans chacun desquels est creusée une partie d'une cavité pour le moulage par injection d'un élément intérieur du corps et la partie fixe (4) du moule comportant une empreinte pour le moulage par injection d'un élément extérieur du corps, le coulisseau (3) étant associé à des moyens permettant de le déplacer dans au moins deux positions, une position où sa cavité de moulage est décalée par rapport à l'empreinte et où est effectué le moulage par injection dudit élément intérieur, et une autre position où sa cavité de moulage est en correspondance avec l'empreinte et où est effectué le moulage dudit élément extérieur, caractérisé en ce que :

— le premier noyau (29) et le second noyau (30) sont respectivement pourvus d'une extrémité à diamètre réduit (29a, 30a) ;

— deux organes tubulaires (31, 32) entourent les deux noyaux (29, 30) en étant en contact mutuel par l'intermédiaire de broches (31a) qui traversent la cavité (34) qu'ils déterminent, pour le moulage d'un élément intermédiaire inséré entre l'élément intérieur et l'élément extérieur précités, chacun desdits organes (31, 32) étant assujetti à des moyens de déplacement axial (35, 36) permettant de déplacer lesdits organes dans deux positions, une position où la cavité de moulage (34) qu'ils déterminent est décalée par rapport à l'empreinte et où est effectué le moulage dudit élément intermédiaire et une autre position où ladite cavité de moulage est en correspondance avec l'empreinte.

## Claim

A mould intended for the manufacture of a body of several members comprising a plunger (3) which can be displaced within a fixed part (4) of the mould, the plunger consisting of two cores which are in line with each other and in contact at their extrimities, in each of which cores there is provided part of a cavity for the injection moulding of an outer member of the body, and the fixed part (4) of the mould incorporates a former for the injection moulding of an outer member of the body, the plunger (3) being associated with means whereby it may be displaced into at least two positions, one position in which its mould cavity is offset in relation to the former and in which injection moulding of the said inner member takes place, and another position in which the mould cavity is in line with the former and in which the said outer member is moulded, characterised in that :

— the first core (29) and the second core (30) respectively are provided with one end having a smaller diameter (29a, 30a),

— two tubular members (31, 32) surround the two cores (29, 30) being in contact with each other through pins (31a) which cross the cavity (34) which they delimit, for the moulding of an intermediate member inserted between the aforesaid inner member and outer member, each of the said components (31, 32) being subject to means effecting axial displacement (35, 36) whereby the said components can be displaced into the two positions, one position in which the mould cavity (34) which they delimit is offset with respect to the former, in which position moulding of the said intermediate member takes place, and another position in which the said mould cavity is in line with the former.

## Patentanspruch

Form zur Herstellung eines Gegenstandes aus mehreren Elementen mit einem im Inneren eines festen Teils (4) der Form verschiebbaren Gleitstück (3), das aus zwei fluchtend zueinander ausgerichteten Kernen besteht, die über ihre Enden miteinander in Kontakt stehen, wobei in jedem Kern für das Spritzgießen eines inneren Elementes des Gegenstandes ein Teil eines Formhohlraum ausgenommen ist und der fest Teil (4) der Form eine Aushöhlung für das Spritzgießen eines äußeren Elementes des Gegenstandes aufweist und wobei das Gleitstück (3) Mitteln zugeordnet ist, die es mindestens in zwei Stellungen verschieben, nämlich eine Stellung, in der der Formhohlraum des Gleitstücks relativ zur Aushöhlung versetzt und in der das Spritzgießen des inneren Elementes vorgenommen wird und eine andere Stellung, in der der Formhohlraum mit der Aushöhlung übereinstimmt und in der das Spritzgießen des äußeren Elementes durchgeführt wird, dadurch gekennzeichnet, daß der erste Kern (29) und der zweite Kern (30) jeweils mit einem Ende reduzierten Durchmessers (29a, 30a) versehen sind ; daß zwei rohrförmige Hülsen (31, 32) die zwei Kerne (29, 30) umgeben, die über den Hohlraum (34), den sie begrenzen, durchgreifende Stangen (31a) in wechselseitigem Kontakt stehen und zum Formen eines zwischen dem inneren und äußeren Element liegenden Zwischenelementes dienen, wobei jede der rohrförmigen Hülsen (31, 32) Mitteln zur axialen Verschiebung (35, 36) unterworfen ist, die die zwei Hülsen in zwei Stellungen verschieben, nämlich in eine Stellung, in der der Formhohlraum (34), den sie begrenzen, in bezug auf die Aushöhlung versetzt ist und in der das Formen des Zwischenelementes vorgenommen wird und in eine andere Stellung, in der der Formhohlraum mit der Aushöhlung übereinstimmt.

*Fig. 1*

*Fig. 2*

Fig. 3